# FASCICULE DE BREVET EUROPEEN

(11) **EP 0 993 246 B1**
(45) Date de publication et mention de la délivrance du brevet: **02.02.2005**
(21) Numéro de dépôt: 99902636.2
(22) Date de dépôt: 11.02.1999
(51) Int. Cl.: A01N 37/46

(54) **COMPOSITIONS DESTINEES A L'AMELIORATION DES PRODUCTIONS DES CULTURES, DE LEUR QUALITE, ET DE LEUR PROTECTION**
ZUSAMMENSETZUNGEN ZUR VERBESSERUNG DES ERTRAGES, DER QUALITÄT UND DES SCHUTZES VON PFLANZENKULTUREN
COMPOSITIONS FOR IMPROVING CROP PRODUCTION, THE QUALITY AND PROTECTION THEREOF

(30) Priorité: 26.03.1998 FR 9803723
(43) Date de publication de la demande: 19.04.2000
(73) Titulaire: Lauzanne, Eliane, 75010 Paris (FR)
(72) Inventeur: Lauzanne, Eliane, 75010 Paris (FR)
(86) Numéro de dépôt international: PCT/FR1999/000297
(87) Numéro de publication internationale: WO 1999/048364

(56) Documents cités:
- EP-A- 0 218 501
- WO-A-92/20647
- DE-A- 2 415 750
- FR-A- 2 403 024
- GB-A- 2 097 256

## Description

Le brevet français N° 77 27703 concerne la protection d'emploi dans l'agriculture d'un certain nombre de structures lipoaminoacides, les recherches ayant montré leur activité générale sur la fonction chlorophyllienne ; ceci sans apporter de précisions sur les rapports existant entre la nature des structures utilisées, la nature du végétal, les conditions qui permettent une activité maximale sur la rentabilité des productions végétales. Or, il a été observé, qu'un ensemble de facteurs devait être pris en considération ; ceux-ci pouvant conduire à des résultats positifs comme négatifs.

En effet, vingt années d'expérimentation ont permis de se rendre compte que n'importe quelle structure indiquée dans ce brevet ne permettait pas d'obtenir des résultats favorables étant donné le nombre de paramètres intervenant : nature de la molécule, concentration de la molécule par hectare, moment d'application en fonction des différents états évolutifs et des conditions climatiques.

Or, suite à de nombreux essais réalisés sur le terrain, il a été surprenant de constater, que certaines structures lipoaminoacides, contrairement à d'autres, salifiées ou non par des oligo-éléments tels que, le cuivre et le zinc avaient une efficacité que l'on pouvait mettre en parallèle avec celle des hormones végétales ( auxines) étant donné la faible quantité à utiliser par hectare, que la dose de 6g/ha (exprimée en substance anhydre) suffisait à obtenir des résultats positifs, pour certains types de culture.

Ces observations nous montrent, que l'application des structures indiquées dans divers brevets nécessitaient pour leur application, des études particulièrement longues afin d'obtenir les résultats recherchés.

Il a été constaté, que l'activité était liée à l'hydrosolubilité de la substance, ce que l'on rencontre avec la chaîne butyrique et la chaîne caprylique, mais pas avec les autres chaînes grasses.

Il a été surprenant de constater :
Que l'utilisation du sel de zinc de butyrylaminoacides à des concentrations se situant entre 5 et 10g pour 100 à 150kg de semences augmentait le pouvoir germinatif et l'enracinement des semences.
Que l'utilisation de ce sel de zinc de butyrylaminoacides, protégeait les semences de leur destruction par les animaux ( oiseaux, lapins, sangliers...) par une action répulsive, à des concentrations se situant entre 3g et 5g pour 100 à 150kg de semences.
Qu'il suffit de 0,1 mol/ha de sel de cuivre de butyrylaminoacides pour augmenter de 5 à 10% le rendement des légumineuses ( pois, haricots )
Que dans le cas de la culture de la pomme de terre, si l'on traite à la fin de la phase de tubérisation avec deux fois 50g de sel de cuivre de butyrylaminoacides, soit 0,2 mol/ha, on obtient une augmentation de 4 tonnes/ha. On obtient un rendement moins élevé avec le sel de cuivre du lipoaminoacide caprylique.
   D'autre part, on constate une meilleure uniformité des tubercules, ainsi qu'une augmentation de leur calibre, d'où l'amélioration de la qualité de la culture. Si le traitement s'effectue durant la phase de tubérisation, le cycle de développement est alors perturbé, les résultats précédents ne peuvent être obtenus.
Qu'il suffit de 0,036 à 0,36 mol/ha de sel de cuivre de caprylylaminoacides pour augmenter de 5 à 10% les teneurs en sucre de la betterave et du raisin . Au delà des doses pratiques d'utilisation, on dépasse l'optimum d'efficacité sans cependant d'effet néfaste pour la plante.
Que dans le cas des céréales, il est préférable d'avoir recours au sel de cuivre de caprylylaminoacides, en traitant, soit à la montaison, soit à la floraison, soit par plusieurs traitements, à raison de 6g /ha (0,01 mol) ou 60g/ha en une seule fois (0,1 mol)
Qu'il a enfin été constaté, que les sels de zinc ou de cuivre de butyrylaminoacides conduisaient à une agressivité pour la fleur et qu'il était impératif d'utiliser ce produit non salifié à une teneur de 60g à 100g/ha.

C'est ainsi que, dans le cadre de l'invention, on aura recours à des chaînes grasses comportant 4 et 8 atomes de carbone, c'est-à-dire, à la chaîne butyryle et à la chaîne caprylyle, acylées aux acides aminés issus d'hydrolysats de protéines animales, y compris les protéines de poisson ou encore de végétaux.

L'invention concerne l'augmentation des rendements de production des produits issus de l'agriculture, caractérisée en ce qu'elle est basée sur un traitement strictement biologique, non polluant, grâce à la haute activité, pour une très faible concentration (moins d'une mol/ha) des lipoaminoacides butyryle ou caprylyle, ou de leurs sels de cuivre ou de zinc.

L'invention s'étend également à la protection des cultures contre les animaux destructeurs de récoltes par l'emploi du sel de zinc du butyrylaminoacides aux concentrations indiquées en page 2 de la description.

## Revendications

1. Procédé d'utilisation du sel de zinc de butyrylaminoacides pour l'augmentation du pouvoir germinatif et l'enracinement des semences, à des concentrations se situant entre 5g et 10g pour 100 à 150kg de semences.

2. Procédé d'utilisation du sel de zinc de butyrylaminoacides pour protéger les semences de leur destruction par les animaux, à des concentrations se situant entre 3g et 5g pour 100 à 150kg de semences.

3. Procédé d'utilisation du sel de cuivre de butyrylaminoacides à une concentration de 0,1 et 0,2mol/ha pour l'augmentation du rendement des légumineuses de 5 à 10% ( pois, haricots) et de celui de la pomme de terre de l'ordre de 4 tonnes/ha respectivement.

4. Procédé d'utilisation du sel de cuivre de caprylylaminoacides à une concentration comprise entre 0,036 et 0,36 mol/ha pour l'augmentation de la teneur en sucre de la betterave et du raisin de 5 à 10%.

5. Procédé d'utilisation du sel de cuivre de caprylylaminoacides pour l'augmentation des rendements des céréales à des concentrations se situant entre 0,01 mol/ha et 0,1 mol/ha

6. Procédé d'utilisation de butyrylaminoacides non-salifiés pour l'augmentation des rendements des céréales à des concentrations de 60g à 100g/ha.

## Claims

1. A method of using zinc salts of butyric-amino acids to increase the germinal capacities as well as root development by administering 5 to 10 g. per 100-150 kg. of crops.

2. A method of using zinc salts of butyric-amino acids in an amount effective to protect crops by repelling animals destructive to them by administering 3 to 5 g. per 100-150 kg. of crops.

3. A method of using copper salts of butyric-amino acids by administering 0.1 to 0.2 mol/ha in order to obtain a 5 to 10% increase in crop yields of legumes (peas, green beans) and an increase in potato crop yield of 4 metric tons per hectare.

4. A method of using copper salts of caprylic-amino acids by administering 0.036 to 0.36 mol./ha to increase the sugar content of beets and grapes by 5 to 10%.

5. A method of using copper salts of caprylic-amino acids to increase cereals crop yields by administering 0.01 to 0.1 mol/ha.

6. A method of using butyric-amino acids non-salified to increase cereals crop yields by administering 60 to 100 g/ha.

## Patentansprüche

1. Verfahren zur Nutzung des Butyrylaminosäure-Zinksalzes zur Erhöhung der Keimkraft und Verwurzelung des Saatgutes durch Konzentrationen zwischen 5 und 10 g pro 100 bis 150 kg Saatgut.

2. Verfahren zur Nutzung des Butyrylaminosäure-Zinksalzes zum Schutz des Saatgutes vor der Vernichtung durch Tiere, durch Konzentrationen zwischen 3 und 5 g pro 100 bis 150 kg Saatgut.

3. Verfahren zur Nutzung des Butyrylaminosäure-Kupfersalzes in einer Konzentration von 0,1 bis 0,2 mol/ha zur Erhöhung des Ernteertrags von Leguminosen (Erbsen, Bohnen) um 5 bis 10 % und den von Kartoffeln um ungefähr 4 Tonnen/ha.

4. Verfahren zur Nutzung des Caprylylaminosäure-Kupfersalzes in einer Konzentration von 0,036 bis 0,36 mol/ha zur Erhöhung des Zuckergehaltes von Rüben und Trauben um 5 bis 10 %.

5. Verfahren zur Nutzung des Caprylylaminosäure-Kupfersalzes in einer Konzentration von 0,01 bis 0,1 mol/ha zur Erhöhung des Ernteertrages von Getreide.

6. Verfahren zur Nutzung der nicht salifierten Butyrylaminosäuren in einer Konzentration von 60 g bis 100 g/ha zur Erhöhung des Ernteertrages von Getreide.
